# EUROPÄISCHE PATENTSCHRIFT

(11) **EP 1 351 041 B1**
(45) Veröffentlichungstag und Bekanntmachung des Hinweises auf die Patenterteilung: **20.10.2010**
(21) Anmeldenummer: 03100835.2
(22) Anmeldetag: 31.03.2003
(51) Int. Cl.: G01G 21/28

(54) **Waage mit Windschutz**
Wind protection for a balance
Balance avec une protection contre le vent

(30) Priorität: 04.04.2002 DE 10214954
(43) Veröffentlichungstag der Anmeldung: 08.10.2003
(73) Patentinhaber: Mettler-Toledo AG, 8606 Greifensee (CH)
(72) Erfinder: Aebi, Christoph, 2000, Neuenburg (CH); Lüchinger, Paul, 8610, Uster (CH)

(56) Entgegenhaltungen:
- EP-A- 1 102 045
- GB-A- 2 246 446
- US-A- 4 700 793
- US-A- 5 285 021

## Beschreibung

Die Erfindung betrifft eine Waage, insbesondere eine Präzisions- oder Analysenwaage mit einem eine Waagschale umschliessenden Wägeraum, mit einem den Wägeraum begrenzenden Windschutz, welcher mindestens zwei zum Öffnen und Schliessen des Wägeraums verschiebbare Wände aufweist, wobei die verschiebbaren Wände für ein synchrones Öffnen und Schliessen miteinander koppelbar sind.

Solche Waagen sind im Stand der Technik wohlbekannt und finden ihren Einsatz vorwiegend im Laborbereich beispielsweise zum Einwägen von Substanzen für die Durchführung chemischer Analysen. GB 2 246 446 A offenbart eine solche Waagen.

Die EP 0 234 008 A2 offenbart ebenfalls eine solche Waage, wobei der Windschutz ein feststehendes Frontglas, je eine seitlich nach hinten verschiebbare Schiebetür und eine nach hinten verschiebbare Abdeckung aufweist. Die beiden seitlichen Schiebetüren sind durch eine unter der Waage verschiebbar gelagerte Platte miteinander verbindbar. In den Griffen integrierte Riegel, welche vorzugsweise als in eine Vertiefung mittels linearer Verschiebung eingreifbare Bolzen ausgestaltet sind, ermöglichen es, die seitlichen Schiebetüren und die Abdeckung bedarfsweise miteinander zu verbinden. Mittels der die je an den beiden Schiebetüren unten befestigten Griffe verbindenden Platte können sowohl beide Schiebetüren gleichzeitig als auch je eine davon von der gegenüberliegenden Seite betätigt werden.

Die Möglichkeit der synchronen Bewegung von Schiebefenstern sowie des Öffnens und Schliessens eines seitlichen Schiebefensters von der gegenüberliegenden Seite eröffnet auch die in der EP 0 547 298 A1 offenbarte Waage, deren seitliche Schiebefenster bevorzugt aus zwei einen stumpfen Winkel zueinander einnehmenden Scheiben bestehen und daher auf gekrümmten Führungsbahnen zu verschieben sind. Aus diesem Grund weist eine an der Unterseite der Waage vorhandene Verschiebevorrichtung für die seitlichen Schiebefenster zwei das Gehäuse jeweils seitlich überragende flache Betätigungshebel auf, welche am Boden des Gehäuses schwenkbar gelagert sind und über ein flaches Kupplungselement in Form einer ebenfalls unter der Waage angeordneten verschiebbaren Platte miteinander verbunden sind. Hier erfolgt die Verbindung der seitlichen Schiebefenster mit der verschiebbaren Platte entweder durch einen vertikal verschiebbaren Bolzen oder durch einen kleinen am unteren Griffteil angeordneten verschwenkbaren Riegel, der in eine Vertiefung am oberen Griffteil eingreift.

In beiden Fällen oben beschriebener Waagen ist das Verbindungs- oder Kupplungselement, insbesondere der Bolzen oder Riegel im wesentlichen im Griff verborgen, so dass eine mehrere Meter entfernt von der Waage stehende Person, beispielsweise direkt beim Betreten des Labors, nicht unmittelbar erkennen kann, in welcher Arbeitsstellung hinsichtlich der Verbindung der Schiebefenster untereinander und/oder mit der Verschiebevorrichtung beziehungsweise der verbindenden Platte die Waage sich gerade befindet.

Aufgabe der Erfindung ist es daher, eine Waage zur Verfügung zu stellen, bei welcher auch aus grösserer Entfernung, nahezu beiläufig, die Arbeitsstellung bezüglich der zu öffnenden und schliessenden Schiebefenster der Waage erkannt werden kann.

Diese Aufgabe wird erfindungsgemäss durch eine Waage gemäss Anspruch 1 gelöst. Eine Waage, insbesondere eine Präzisions- oder Analysenwaage, mit einem eine Waagschale umschliessenden Wägeraum, mit einem den Wägeraum begrenzenden Windschutz, welcher mindestens zwei zum Öffnen und Schliessen des Wägeraums verschiebbare Wände aufweist, mit einem verschiebbaren Verbindungskörper, welcher einer Verbindung nicht aneinander angrenzender verschiebbarer Wände dient, ist mit Verschiebegriffen, die für ein miteinander Koppeln und voneinander Lösen der verschiebbaren Wände untereinander, beziehungsweise einer verschiebbaren Wand mit dem Verbindungskörper ausgestaltet sind, ausgestattet. Ein solcher Verschiebegriff ist aus einander paarweise ergänzenden Griffelementen gebildet, die an jeweils zueinander benachbarten verschiebbaren Wänden, beziehungsweise an dem Verbindungskörper und einer dazu benachbarten verschiebbaren Wand befestigt sind, und die jedes einzeln für sich als Griff zum Verschieben der entsprechenden Wand beziehungsweise des Verbindungskörpers ausgestaltet sind. Von den Griffelementen weist ein erstes Griffelement eine Aussparung auf, in welche das jeweils zweite Griffelement durch eine Schwenkbewegung des ersten und/oder des zweiten Griffelements für eine Kopplung des Griffelementenpaares eingreifbar ausgestaltet ist, wobei ein zu einem Verschiebegriff gekoppeltes Griffelementenpaar in seiner äusseren Form und Grösse im wesentlichen derjenigen des ersten Griffelements mit der Aussparung entspricht.

Ein besonderer Vorteil dieser Kombination von einem Griff zum manuellen Verschieben einer Wand einerseits und der Kopplung verschiebbarer Wände mit Hilfe dieses Griffs andererseits, ist, dass die Zustände "gekoppelt" und "gelöst" gut sichtbar sind und demzufolge ein Benutzer einer solchen Waage unmittelbar erkennen kann, mit welchem Griff oder Griffelement der Wägeraum, beispielsweise zum Beschicken geöffnet werden kann. Eine solche Waage, die mit zu einem Verschiebegriff kombinierbaren Griffelementen, die individuell jeweils ebenfalls als Griff zum Verschieben einer Wand verwendet werden können, ausgestattet ist, hat insbesondere auch in ergonomischer Hinsicht Vorteile.

In einer bevorzugten Ausführungsform ist die Aussparung des ersten Griffelements zur Aufnahme des zweiten Griffelements, sowie das zweite Griffelement für ein selbstzentrierendes Eingreifen des zweiten Griffelements in das erste Griffelement ausgestaltet. Ein exaktes Positionieren der beiden Griffelemente vertikal übereinander, ist nicht mehr unbedingt erforderlich, um sie durch Verschwenken ineinander zu einem Verschiebegriff zu kombinieren. Dies erleichtert den Arbeitsablauf.

Ein Verschiebegriff, wie auch die ihn formenden Griffelemente sind in einer etwa länglichen Scheibenform, insbesondere flügelförmig ausgestaltet, wobei mindestens ein Griffelement eines Griffelementenpaares um eine Achse, welche a-zentrisch das Griffelement durchstösst, schwenkbar ist. In einer Weiterentwicklung weisen die Griffelemente an ihren äusseren Flächen ergonomische Griffmulden auf

Ein schwenkbares Griffelement ist bevorzugt in zwei stabile Positionen, von denen eine die Kopplung des Griffelementenpaares zum Verschiebegriff ist, einrastbar ausgestaltet und wird mittels einer Feder in der jeweils ausgewählten Position stabil gehalten.

In einer besonders vorteilhaften Ausgestaltung sind in der Waage Führungsvorrichtungen für das Verschieben der Wände vorhanden, wobei ein entsprechendes Griffelement an jeweils einer Führungsvorrichtung angebracht ist. Insbesondere ist das schwenkbare Griffelement an seiner Achse um diese schwenkbar an einer verschiebbaren Wand, insbesondere an einer mit dieser verbundenen Führungsvorrichtung, und/oder dem Verbindungskörper angebracht.

Die Erfindung wird anhand eines Ausführungsbeispiels einer erfindungsgemässen Waage sowie verschiedenen Ausgestaltungen eines erfindungsgemässen Verschiebegriffs im folgenden in den stark schematisierten Zeichnungen dargestellt.
Es zeigen:
- Figur 1: eine Waage in einer dreidimensionalen Darstellung, ohne Anzeige- und Bedieneinheit,
- Figur 2: eine Schnittzeichnung durch den Bodenraum einer Waage in einer Ebene parallel zur Frontwand,
- Figur 3: a bis d: eine erste Ausführungsform eines Verschiebegriffs aus verschiedenen Ansichten,
- Figur 4: a bis d: eine zweite Ausführungsform eines Verschiebegriffs aus verschiedenen Ansichten,
- Figur 5: a bis d: eine dritte Ausführungsform eines Verschiebegriffs aus verschiedenen Ansichten.

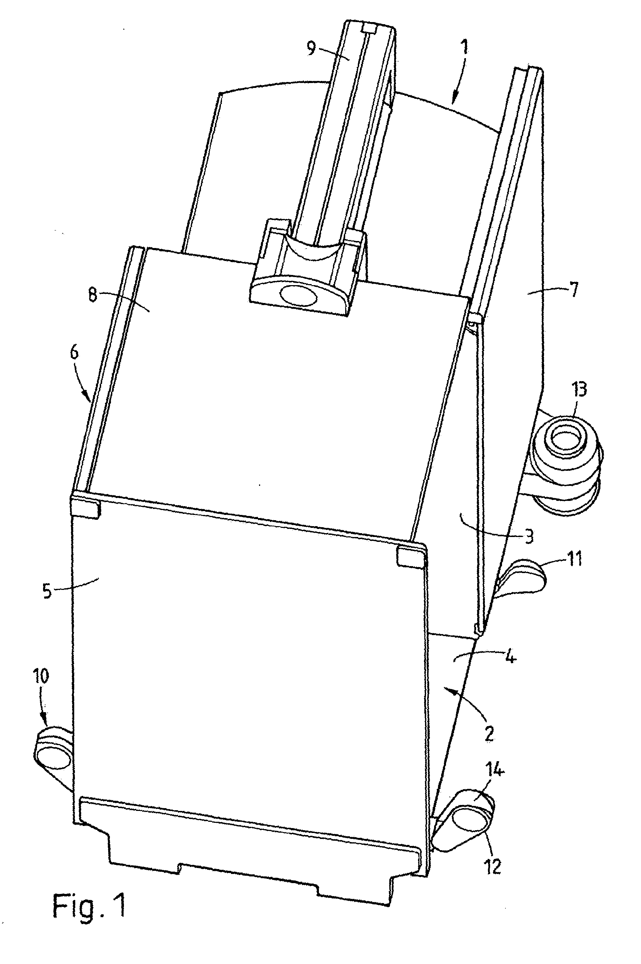

Die Figur 1 zeigt eine Waage, wie sie beispielsweise ihren Einsatz in einem Labor als Analysenwaage findet. Die Waage weist ein Waagengehäuse 1, in welchem hauptsächlich die Wägemechanik und die Wägeelektronik untergebracht sind, und einen eine hier nicht sichtbare Waagschale umschliessenden Wägeraum 2 auf. Die Rückwand 3 und der Boden 4 des Wägeraums 2 bilden den feststehenden Teil der Waage. Ferner begrenzen, als Windschutz dienend, eine Frontwand 5 und zwei Seitenwände 6, 7 sowie eine Abdeckwand 8 den Wägeraum 2. Die beiden Seitenwände 6, 7 und die Abdeckwand 8 sind zum Öffnen und Schliessen des Wägeraums 2 nach hinten über das Waagengehäuse verschiebbar. Die Waage steht auf drei Füssen 13, von denen lediglich einer in der Figur zu sehen ist.

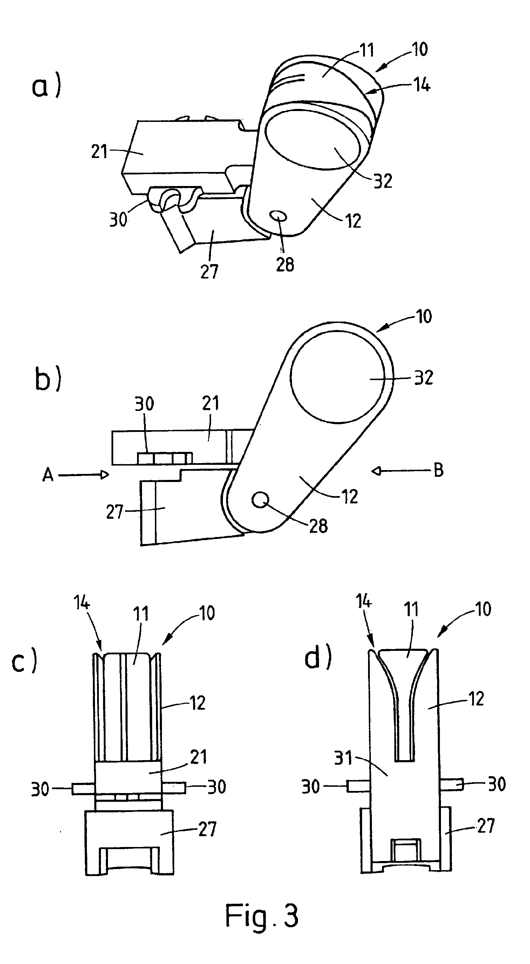

Oben am Waagengehäuse 1 ist ein Haltegriff 9 angebracht, welcher neben einer Tragefunktion noch die Funktion einer Führungsschiene für das Öffnen und Schliessen der Abdeckwand 8 hat. Die beiden Seitenwände 6, 7 sind an einer Führungsvorrichtung (hier nicht sichtbar) befestigt und können mittels eines Verschiebegriffs 10, beispielsweise zum Öffnen des Wägeraums 2 nach hinten über das Waagengehäuse 1 bewegt werden. Der Verschiebegriff 10 setzt sich aus zwei Griffelementen 11, 12 zusammen, wovon eines, das Griffelement 11, starr mit einer Seitenwand 6, 7 und/oder deren Führungsvorrichtung verbunden ist und ein zweites, Griffelement 12, in einer zu den beiden Seitenwänden 6, 7 etwa senkrecht verlaufenden Ebene verschwenkbar ist. Beide Griffelemente 11, 12 können einzeln für sich ebenfalls als Griff zum Verschieben einer Seitenwand 6, 7 verwendet werden, wie in der Figur rechts anhand der mit dem Griffelement 11 nach hinten verschobenen Seitenwand 7 gezeigt ist. Wird die Seitenwand 7 so positioniert, dass das starre Griffelement 11 vertikal über dem schwenkbaren Griffelement 12 zu liegen kommt, so kann durch eine Schwenkbewegung des Griffelements 12 das Griffelement 11 in die Aussparung 14 eingreifen und beide Griffelemente zu einem Verschiebegriff 10 kombinieren. Dabei ist durch die besondere Ausgestaltung der beiden Griffelemente 11, 12, ein selbstzentrierendes Ineinandergreifen gewährleistet, wie weiter unten anhand der Beschreibung der Figur 3, näher ausgeführt wird

Die beiden Griffelemente 11, 12 bilden somit ein Griffelementenpaar, welches sich durch eine Schwenkbewegung zu einem Verschiebegriff 10 formieren lässt. Dabei entspricht der Verschiebegriff 10 in seiner Grösse und äusseren Form im wesentlichen jener des schwenkbaren Griffelements 12.

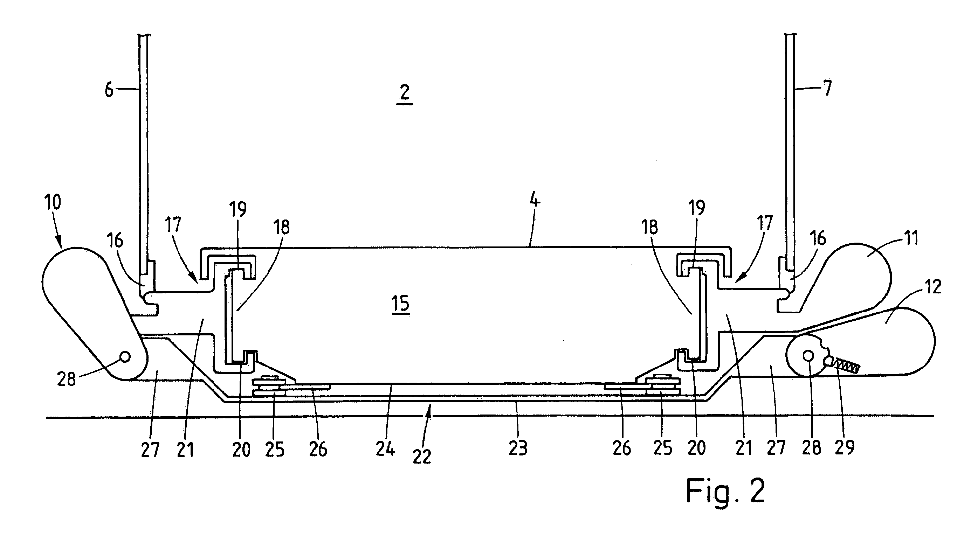

Die Figur 2 zeigt einen Schnitt in einer Ebene parallel zur Frontwand 5 durch den unteren Bereich einer für den Betrieb aufgestellten Waage. In einem unterhalb des Bodens 4 des Wägeraums 2 befindlichen Bodenraum 15 ist beispielsweise eine Kalibriervorrichtung (hier nicht gezeigt) untergebracht. Die beiden Seitenwände 6, 7 sind mittels Halterungen 16 an jeweils einer Führungsvorrichtung 17, vorzugsweise lösbar, angebracht. Diese weist beidseitig je eine fest mit dem Bodenraum 15 verbundene und sich vorzugsweise über die gesamte Länge (senkrecht zur Schnittebene der Figur) des Bodenraumes 15 erstreckende Führungsschiene 18 auf. Letztere wird von jeweils einem mit unten und oben je einer Führungsnut 19, 20 versehenen Wagen 21 umgriffen. Beim Verschieben einer Seitenwand 6, 7 gleitet der entsprechende Wagen 21 entlang der Führungsschiene 18. Am jeweils äusseren, seitlich über den Wägeraum 2 vorstehenden Ende eines Wagens 21 ist mit diesem, wie auf der rechten Seite in der Figur dargestellt ist, ein Griffelement 11 starr verbunden, an welchem, wie in der Figur 1 gezeigt, zum manuellen Verschieben der Seitenwand 7 für ein Öffnen oder Schliessen des Wägeraums 2 angegriffen werden kann. In diesem Sinne bilden der Wagen 21 und die über die Halterung 16 mit diesem verbundene Seitenwand 7 eine verschiebbare Wand. Es ist selbstverständlich auch möglich, das starre Griffelement 11 an der Seitenwand 7 direkt oder an der Halterung 16 anzubringen.

Unterhalb des Bodenraums 15 ist ein Verbindungskörper 22 angebracht. Dieser besteht aus einer Platte 23, welche sich unterhalb des Gehäusebodens 24 über die gesamte Breite des Bodenraums 15 erstreckt. Der Verbindungskörper 22 ist mittels vier Rollen 25 (nur zwei davon sind in der Figur zu sehen), die jeweils an einen am Gehäuseboden 24 befestigten Vorsprung 26 geführt sind entlang dem Bodenraum 15 in einer Richtung senkrecht zur Schnittebene in der Figur verschiebbar.

Mit der Platte 23 sind beidseitig Haltevorrichtungen 27 verbunden, an welchen die über den Wägeraum 2 hinausragenden schwenkbaren Griffelemente 12 befestigt sind. Diese sind derart angeordnet, dass sie über ein vertikal oberhalb von ihnen positioniertes starres Griffelement 11 (wie in der Figur auf der rechten Seite gezeigt ist) geschwenkt werden können, wobei sie die starren Griffelemente 11 in einer Aussparung 14 in ihrem Innern aufnehmend zum Verschiebegriff 10 kombinieren (siehe linke Seite der Figur).

Sind, wie links in der Figur 2 dargestellt, ein starres und ein schwenkbares Griffelement 11, 12 zum Verschiebegriff 10 gekoppelt, so ist gleichzeitig die Führungsvorrichtung 17 der entsprechenden Seitenwand 6 mit dem Verbindungskörper 22 gekoppelt und die Seitenwand 6 kann zusammen mit dem Verbindungskörper 22 verschoben werden. Dies kann nun gemäss der Darstellung in der Figur entweder mittels des Verschiebegriffs 10 auf der linken Seite oder mittels des Griffelements 12 auf der rechten Seite der Waage erfolgen. Auf diese Weise wird einem Benutzer der Waage ermöglicht, mit einer Hand die gegenüberliegende Seitenwand zum Öffnen und Schliessen des Wägeraums 2 zu betätigen. Sollen beide Seitenwände 6, 7 gleichzeitig durch Betätigen mit nur einem Griff, verschoben werden, so sind auf beiden Seiten die starren Griffelemente 11 und die schwenkbaren Griffelemente 12 miteinander zu einem jeweiligen Verschiebegriff 10 zu koppeln.

Das schwenkbare Griffelement 12 ist in zwei stabile Positionen, von denen eine die Kopplung des Griffelementenpaares zum Verschiebegriff 10 ist, einrastbar ausgestaltet. Mittels einer Feder 29 wird das Griffelement 12 in der jeweils stabilen Position gehalten.

Die Figuren 3 bis 5 zeigen verschiedene Ausführungsformen von Verschiebegriffen 10, 110, 210 aus verschiedenen Ansichten. In den Figuren 3a, 4a und 5a ist jeweils eine Ausführung eines Verschiebegriffes 10, 110, 210 in dreidimensionaler Darstellung gezeigt. Die Figuren 3b, 4b und 5b zeigen jeweils einen Griff aus der Seitenansicht, wie er auch in der Figur 2 zu sehen ist, die Figuren 3c, 4c und 5c gewähren eine Sicht in Richtung des Pfeils A in den Figuren 3b, 4b und 5b und die Figuren 3d, 4d und 5d in Richtung des Pfeils B in den Figuren 3b, 4b und 5b. In allen dargestellten Ausführungsformen ist das starre Griffelement 11, 111, 211 in die Aussparung (14, 114, 214) des jeweiligen schwenkbaren Griffelements 12, 112, 212 eingerastet, so dass der Wagen 21 der Führungsvorrichtung 17 einer Seitenwand mit der Haltevorrichtung 27 des Verbindungskörpers 22 gekoppelt ist. Die jeweils am Wagen 21 angebrachten Befestigungsösen 30 dienen der Verbindung mit der Halterung 16 für die Seitenwände 6, 7.

Allen dargestellten Ausgestaltungen eines Verschiebegriffes 10, 110, 210 ist gemeinsam, dass dieser eine etwa längliche Scheibenform hat, also etwa flügelförmig ausgestaltet ist, und mindestens eines seiner Griffelemente 12, 112, 212 um eine Achse 28 schwenkbar ist. Dabei durchstösst die Achse 28, welche ein Griffelement 12, 112, 212 mit der Haltevorrichtung 27 verbindet, das ebenfalls etwa scheibenförmige schwenkbare Griffelement 12, 112, 212 ungefähr senkrecht zu seinen äusseren Flächen und ist a-zentrisch angeordnet. Wie in den Figuren 3d, 4d und 5d erkennbar ist, weist jedes schwenkbare Griffelement 12, 112, 212 einen Anschlag 31 auf, so dass die Position eines ineinander geschwenkten Griffelementenpaares eindeutig definiert ist.

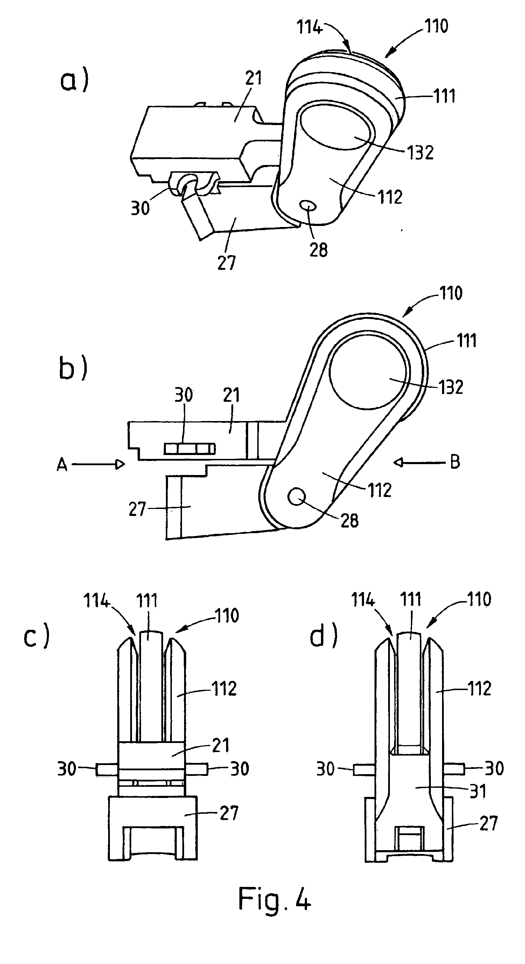

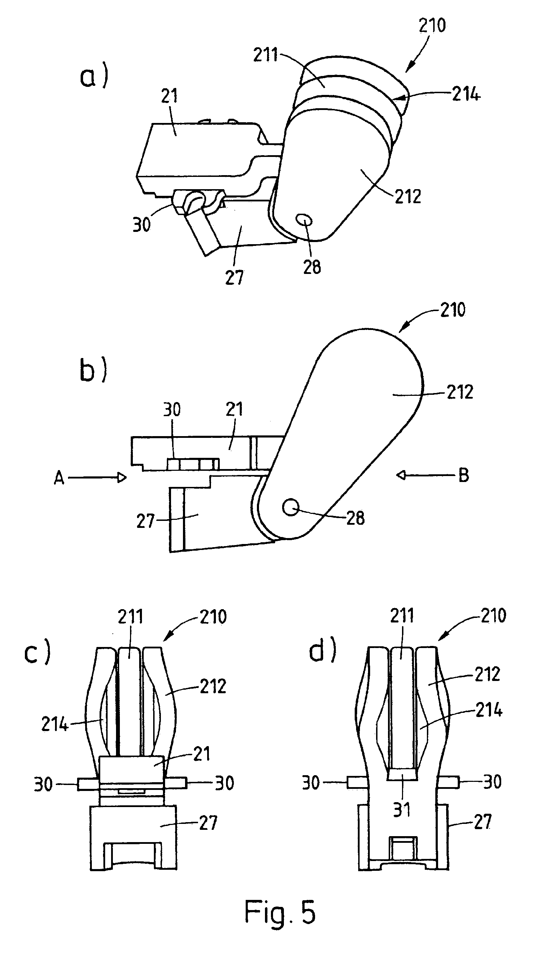

Die in den Figuren 3 und 4 gezeigten schwenkbaren Griffelemente 12, 112 und damit auch ein von einem Griffelementenpaar geformter Verschiebegriff 10, 110 weisen jeweils eine Griffmulde 32, 132 auf. Im Unterschied dazu zeigt das schwenkbare Griffelement 212 in der Figur 5 eine ergonomisch geformte Aussenfläche.

Eine besonders bevorzugte Ausführungsform eines Griffelementenpaares ist diejenige, wie sie in der Figur 3 dargestellt ist. Hier besitzt das starre Griffelement 11 auf beiden Seiten nach innen gewölbte Aussenflächen (siehe auch Figur 1), wobei die Innenflächen der Aussparung 14 des schwenkbaren Griffelements 12 passgenau dazu geformt sind. Somit wird eine Zentrierung und ein leichtgängiges Ineinanderschwenken der Griffelemente 11, 12 erreicht. Insbesondere ist aber diese Ausführungsform der beiden Griffelemente 11, 12 selbstzentrierend. Ein exaktes Positionieren der beiden Griffelemente 11,12 vertikal übereinander ist nicht mehr unbedingt erforderlich, um sie durch Verschwenken ineinander zu einem Verschiebegriff 10 zu kombinieren. Es genügt, wenn wenigstens ein Teilbereich eines Griffelements 11 vertikal über einem Teilbereich eines Griffelements 12 angeordnet ist.

Selbstverständlich können solche zu einem Verschiebegriff koppelbaren Griffelemente eines Griffelementenpaares, wovon mindestens ein Griffelement schwenkbar sein muss, auch im oberen Teil der Waage, beispielsweise jeweils an der Abdeckwand und den beiden Seitenwänden angebracht sein, um diese für ein synchrones Verschieben durch Ineinandergreifen miteinander zu koppeln. Auch ist die Anordnung der erfindungsgemässen Verschiebegriffe nicht auf eine Waage mit rechteckigem Querschnitt begrenzt.

### Bezugszeichenliste

- 1: Waagengehäuse
- 2: Wägeraum
- 3: Rückwand
- 4: Boden des Wägeraums
- 5: Frontwand
- 6: Seitenwand
- 7: Seitenwand
- 8: Abdeckwand
- 9: Haltegriff
- 10, 110, 210: Verschiebegriff
- 11, 111, 211: Starres Griffelement
- 12, 112, 212: Schwenkbares Griffelement
- 13: Fuss
- 14, 114, 214: Aussparung
- 15: Bodenraum
- 16: Halterung
- 17: Führungsvorrichtung
- 18: Führungsschiene
- 19: Obere Führungsnut
- 20: Untere Führungsnut
- 21: Wagen
- 22: Verbindungskörper
- 23: Platte
- 24: Gehäuseboden
- 25: Rolle
- 26: Vorsprung
- 27: Haltevorrichtung
- 28: Achse
- 29: Feder
- 30: Befestigungsöse
- 31: Anschlag
- 32, 132: Griffmulde

## Patentansprüche

1. Waage, insbesondere Präzisions- oder Analysenwaage, mit einem eine Waagschale umschliessenden Wägeraum (2), mit einem den Wägeraum (2) begrenzenden Windschutz, welcher mindestens zwei zum Öffnen und Schliessen des Wägeraums (2) verschiebbare Wände (6, 7, 8) aufweist, mit einem verschiebbaren Verbindungskörper (22), welcher einer Verbindung nicht aneinander angrenzender verschiebbarer Wände (6, 7, 8) dient, mit Verschiebegriffen (10, 110, 210), die für ein miteinander Koppeln und voneinander Lösen der verschiebbaren Wände (6, 7, 8) untereinander beziehungsweise der verschiebbaren Wände (6, 7) mit dem Verbindungskörper (22) ausgestaltet sind, **dadurch gekennzeichnet, dass** ein Verschiebegriff (10, 110, 210) aus einander paarweise ergänzenden Griffelementen (11, 12, 111, 112, 211, 212) gebildet ist, die an jeweils zueinander benachbarten verschiebbaren Wänden (6, 7, 8), beziehungsweise an dem Verbindungskörper (22) und einer dazu benachbarten verschiebbaren Wand (6, 7) befestigt sind, und die jedes einzeln für sich als Griff zum Verschieben der entsprechenden Wand (6, 7, 8) beziehungsweise des Verbindungskörpers (22) ausgestaltet sind, von denen ein erstes Griffelement (12, 112, 212) eine Aussparung (14, 114, 214) aufweist, in welche das jeweils zweite Griffelement (11, 111, 211) durch eine Schwenkbewegung des ersten und/oder des zweiten Griffelements (11, 12, 111, 112, 211, 212) für eine Kopplung des Griffelementenpaares eingreifbar ausgestaltet ist, wobei ein zu einem Verschiebegriff (10, 110, 210) gekoppeltes Griffelementenpaar in seiner äusseren Form und Grösse im wesentlichen derjenigen des ersten Griffelements (12, 112, 212) mit der Aussparung (14, 114, 214) entspricht.

2. Waage nach Anspruch 1, **dadurch gekennzeichnet, dass** die Aussparung (14) des ersten Griffelements (12) zur Aufnahme des zweiten Griffelements (11) sowie das zweite Griffelement (11) für ein selbstzentrierendes Eingreifen des zweiten Griffelements (11) in das erste Griffelement (12) ausgestaltet sind.

3. Waage nach Anspruch 1 oder 2, **dadurch gekennzeichnet, dass** mindestens ein Griffelement (12, 112, 212) eines Griffelementenpaares um eine Achse (28), welche a-zentrisch das Griffelement (12, 112, 212) durchstösst, schwenkbar ist.

4. Waage nach Anspruch 1, 2 oder 3, **dadurch gekennzeichnet, dass** ein Verschiebegriff (10, 110, 210) und die ihn bildenden Griffelemente (11, 12, 111, 112, 211, 212) in einer etwa länglichen Scheibenform, insbesondere flügelförmig, ausgestaltet sind.

5. Waage nach einem der Ansprüche 1 bis 4, **dadurch gekennzeichnet, dass** ein schwenkbares Griffelement (12, 112, 212) in zwei stabile Positionen, von denen eine die Kopplung des Griffelementenpaares zum Verschiebegriff (10, 110, 210) ist, einrastbar ausgestaltet ist.

6. Waage nach Anspruch 5, **dadurch gekennzeichnet, dass** das Griffelement (12, 112, 212) mittels einer Feder (29) in der jeweils ausgewählten Position stabil gehalten wird.

7. Waage nach einem der Ansprüche 1 bis 6, **dadurch gekennzeichnet, dass** die Griffelemente (11, 12, 111, 112, 211, 212) an ihren äusseren Flächen ergonomische Griffmulden (32, 132) aufweisen.

8. Waage nach einem der Ansprüche 1 bis 7, **dadurch gekennzeichnet, dass** Führungsvorrichtungen (17) für das Verschieben der Wände (6, 7) vorhanden sind, und dass ein entsprechendes Griffelement (11, 111, 211) an einer mit einer verschiebbaren Wand (6, 7) verbundenen Führungsvorrichtung (17) angebracht ist.

9. Waage nach einem der Ansprüche 1 bis 8, **dadurch gekennzeichnet, dass** das schwenkbare Griffelement (12, 112, 212) an seiner Achse (28) um diese schwenkbar an einer verschiebbaren Wand (6, 7, 8), insbesondere an einer mit dieser verbundenen Führungsvorrichtung (17), und/oder dem Verbindungskörper (22) angebracht ist.

## Claims

1. Balance, in particular a precision balance or an analytical balance with a weighing compartment (2) surrounding a weighing pan, wherein the weighing compartment (2) is delimited by a draft shield in which at least two walls (6, 7, 8) are slidable to open and close the weighing compartment (2), wherein a slidable connector body (22) serves to couple slidable walls (6, 7, 8) that are not adjoining each other, and wherein the balance is equipped with slide handles (10, 110, 210) that are configured for coupling and uncoupling either the connection of the slidable walls (6, 7, 8) to each other, or the connection of the slidable walls (6, 7) to the connector body (22); **characterized in that** a slide handle (10, 110, 210) is constituted by two handle elements (11, 12; 111, 112; 211, 212) that complement each other as a pair and are connected either to adjoining slidable walls (6, 7, 8), or to the connector body (22) and a movable wall (6, 7) adjoining the connector body (22), wherein each of the handle elements by itself is configured as a handle to slide the individual wall (6, 7, 8) or the connector body (22) that the handle element is attached to, wherein in each pair of handle elements a first handle element (12, 112, 212) is configured with a recess (14, 114, 214), and a second handle element (11, 111, 211) is configured to engage the recess (14, 114, 214) through a swiveling movement of the first and/or the second handle element in order to couple the pair of handle elements together, and wherein a pair of handle elements in their coupled condition as a slide handle (10, 110, 210) has substantially the same outward contour shape and size as the first handle element (12, 112, 212) with the recess (14, 114, 214).

2. Balance according to claim 1, **characterized in that** the recess (14) of the first handle element (12) for receiving the second handle element (11), as well as the second handle element (11), are configured for a self-centering engagement of the second handle element (11) in the first handle element (12).

3. Balance according to claim 1 or 2, **characterized in that** at least one handle element (12, 112, 212) of a pair of handle elements is configured so that it can be swiveled about an axle (28) which traverses the handle element (12, 112, 212) at an off-center location of the handle element.

4. Balance according to claim 1, 2 or 3, **characterized in that** a slide handle (10, 110, 210) and the handle elements (11, 12, 111, 112, 211, 212) that constitute the slide handle are configured substantially in a shape of elongated discs, in particular wing-shaped discs.

5. Balance according to one of the claims 1 to 4, **characterized in that** a swiveling handle element (12, 112, 212) is configured so that it can snap into two stable positions, wherein one of the two stable positions represents the coupled condition of the pair of handle elements as a slide handle (10, 110, 210).

6. Balance according to claim 5, **characterized in that** the handle element (12, 112, 212) is firmly retained in the currently selected stable position by means of a spring (29).

7. Balance according to one of the claims 1 to 6, **characterized in that** the handle elements (11, 12, 111, 112, 211, 212) at their outward-facing surfaces have ergonomically shaped depressions (32, 132) to facilitate gripping.

8. Balance according to one of the claims 1 to 7, **characterized in that** guide devices (17) are provided for sliding the walls (6, 7) and that a guide device (17) connected to a slidable wall (6, 7) has an associated handle element (11, 111, 211) attached to the guide device (17).

9. Balance according to one of the claims 1 to 8, **characterized in that** the swiveling handle element (12, 112, 212) has a swivel axle (28), that the swiveling handle element (12, 112, 212) is attached through its swivel axle (28) to a slidable wall (6, 7, 8), in particular to a guide device (17) that is connected to the slidable wall (6, 7, 8), and/or that the swiveling handle element (12, 112, 212) is attached through its swivel axle (28) to the connector body (22).

## Revendications

1. Balance, en particulier balance de précision ou balance d'analyse, dotée d'un espace de pesée (2) entourant un plateau de balance, d'une protection contre le vent délimitant l'espace de pesée (2), lequel présente au moins deux parois (6, 7, 8) pouvant coulisser pour l'ouverture et la fermeture de l'espace de pesée (2), d'un corps de liaison (22) coulissant, qui sert à relier des parois (6, 7, 8) coulissantes et non juxtaposées, de poignées de déplacement (10, 110, 210), qui sont conçues pour coupler les parois (6, 7, 8) coulissantes les unes avec les autres et pour les détacher les unes des autres ou pour coupler les parois (6, 7) coulissantes avec le corps de liaison (22), **caractérisée en ce qu'**une poignée de déplacement (10, 110, 210) est formée d'éléments de poignée (11, 12, 111, 112, 211, 212) complémentaires les unes des autres par paires, lesquels sont fixés sur des parois (6, 7, 8) coulissantes et respectivement voisines les unes des autres, ou sur le corps de liaison (22) et une paroi (6, 7) coulissante et voisine du corps, et qui sont conçus chacun individuellement en tant que poignée pour le déplacement de la paroi (6, 7, 8) correspondante ou du corps de liaison (22), éléments de poignée dont un premier élément (12, 112, 212) présente un évidement (14, 114, 214), dans lequel le respectivement second élément de poignée (11, 111, 211) est conçu pour pouvoir s'engager, par un mouvement de basculement du premier et/ou du second élément de poignée (11, 12, 111, 112, 211, 212) pour un couplage de la paire d'éléments de poignée, sachant qu'une paire d'éléments de poignée couplée en une poignée de déplacement (10, 110, 210) correspond dans sa forme extérieure et sa taille sensiblement à celle du premier élément de poignée (12, 112, 212) avec l'évidement (14, 114, 214).

2. Balance selon la revendication 1, **caractérisée en ce que** l'évidement (14) du premier élément de poignée (12) et le second élément de poignée (11) sont conçus respectivement pour le logement du second élément de poignée (11) et pour un engagement autocentré du second élément de poignée (11) dans le premier élément de poignée (12).

3. Balance selon la revendication 1 ou 2, **caractérisée en ce qu'**au moins un élément de poignée (12, 112, 212) d'une paire d'éléments de poignée peut basculer autour d'un axe (28), qui passe à travers l'élément de poignée (12, 112, 212) de façon excentrée.

4. Balance selon la revendication 1, 2 ou 3, **caractérisée en ce qu'**une poignée de déplacement (10, 110, 210) et les éléments de poignée (11, 12, 111, 112, 211, 212) la formant sont conçus dans une forme de disque à peu près allongée, en particulier en forme d'aile.

5. Balance selon l'une quelconque des revendications 1 à 4, **caractérisée en ce qu'**un élément de poignée (12, 112, 212) basculant est conçu de façon à pouvoir s'encliqueter dans deux positions stables, dont l'une est le couplage de la paire d'éléments de poignée en la poignée de déplacement (10, 110, 210).

6. Balance selon la revendication 5, **caractérisée en ce que** l'élément de poignée (12, 112, 212) est maintenu stable au moyen d'un ressort (29) dans la position respectivement choisie.

7. Balance selon l'une quelconque des revendications 1 à 6, **caractérisée en ce que** les éléments de poignée (11, 12, 111, 112, 211, 212) présentent des cavités de poignée (32, 132) ergonomiques sur leurs surfaces extérieures.

8. Balance selon l'une quelconque des revendications 1 à 7, **caractérisée en ce que** des dispositifs de guidage (17) sont présents pour le déplacement des parois (6, 7) et **en ce qu'**un élément de poignée (11, 111, 211) approprié est placé sur un dispositif de guidage (17) relié à une paroi (6, 7) coulissante.

9. Balance selon l'une quelconque des revendications 1 à 8, **caractérisée en ce que** l'élément de poignée (12, 112, 212) basculant est placé sur son axe (28) de façon à pouvoir basculer autour de celui-ci sur une paroi (6, 7, 8) coulissante, en particulier sur un dispositif de guidage (17) relié à cette paroi, et/ou sur le corps de liaison (22).
